# EUROPÄISCHE PATENTSCHRIFT

(11) **EP 1 025 181 B1**
(45) Veröffentlichungstag und Bekanntmachung des Hinweises auf die Patenterteilung: **02.01.2002**
(21) Anmeldenummer: 98954365.7
(22) Anmeldetag: 07.10.1998
(51) Int. Cl.: C09K 5/00, C23F 11/12, C23F 11/14, C23F 11/167

(54) **KÜHLFLÜSSIGKEIT ZUR VERWENDUNG IN BAUTEILEN AUS MAGNESIUM**
COOLING LIQUID FOR UTILIZING IN COMPONENTS MADE OF MAGNESIUM
LIQUIDE DE REFROIDISSEMENT S'UTILISANT DANS DES PIECES EN MAGNESIUM

(30) Priorität: 15.10.1997 DE 19745461
(43) Veröffentlichungstag der Anmeldung: 09.08.2000
(73) Patentinhaber: Haertol Chemie GmbH, 39126 Magdeburg (DE)
(72) Erfinder: BRINCK, Carmen, D-39291 Möser (DE); DÜHRING, Egon, D-39167 Irxleben (DE)
(74) Vertreter: Weber, Thomas, Dr.Dipl.-Chem.
(86) Internationale Anmeldenummer: EP9806367
(87) Internationale Veröffentlichungsnummer: WO9919418

(56) Entgegenhaltungen:
- EP-A- 0 251 480
- EP-A- 0 283 806
- EP-A- 0 564 721
- WO-A-89/09806
- DE-A- 19 546 472
- US-A- 4 389 371
- US-A- 4 647 392
- US-A- 4 759 864

## Beschreibung

Die Erfindung betrifft ein Kühl- bzw. Wärmeübertragungsmittel auf alkoholischer Basis. Es ist einsetzbar in Kühl- bzw. Wärmeübertragungssystemen wie Klimaanlagen, Wärmeaustauscher und insbesondere Kühlsystemen für Verbrennungsmotoren. Die Kühlflüssigkeit ist besonders konzipiert zur Kühlung von Bauteilen, insbesonere Verbrennungsmotoren, aus Magnesium und/oder aus Magnesiumlegierungen.

Kühlsysteme allgemein und insbesondere Kühlsysteme für Verbrennungsmotoren wie beispielsweise Kraftfahrzeugmotoren bestehen aus einer Vielfalt unterschiedlicher Metalle wie beispielsweise Kupfer, Messing, Stahl, Gußeisen, Aluminium, Magnesium und deren Legierungen. Weiterhin sind üblicherweise Lötmetalle wie beispielsweise Lötzinn vorhanden. Diese Materialzusammensetzung bringt besondere Korrosionsprobleme mit sich, insbesondere in Automobilkühisystemen, wo hohe Temperaturen, Drucke und Fließgeschwindigkeiten im Kühlsystem vorliegen. Korrosion verkürzt die Lebensdauer des Kühlsystems und führt durch Bildung unerwünschter Ablagerungen zu einer Verringerung der Wirksamkeit. Kühlflüssigkeiten, die beispielsweise für Automobilkühler geeignet sind, müssen daher nicht nur Gefrierpunkte aufweisen, die deutlich unter 0 °C liegen, beispielsweise zwischen -20 und -30 °C. Sie müssen zusätzlich wirksam gegen Korrosion geschützt werden.

Zur Zeit werden in der Automobilindustrie vor allem Grauguß- oder Aluminiummotoren eingesetzt. Für diese Materialien stehen im Stand der Technik, wie nachstehend referiert, brauchbare korrosionsinhibierende Kühlflüssigkeiten zur Verfügung.

Zur Gefrierpunktserniedrigung wird üblicherweise eine wasserlösliche flüssigalkoholische Komponente verwendet, insbesondere Ethylenglykol. Außer dieser Alkoholkomponenten sind Korrosionsschutzwirkstoffe zwingend erforderlich. An diese ist heutzutage die Forderung zu stellen, in besonders niedrigen Konzentrationen wirksam zu sein und möglichst keine toxikologisch bedenklichen und/oder umweltgefährdenden Stoffe zu enthalten.

Im Stand der Technik sind Gefrierschutzmittel für Kühlsysteme für Grauguß- und Aluminiummotoren bekannt, die außer der Alkoholkomponenten ein Korrosionsschutzsystem enthalten, das auf einer Kombination von bestimmten Carbonsäuren mit Triazolen basiert und dessen Wirksamkeit durch weitere korrosionsschützende Additive wie beispielsweise Borate, Phosphate oder Silicate noch verbessert werden kann.

Beispielsweise lehrt die EP-A-251 480 ein korrosionsinhibiertes Gefrierschutzkonzentrat, das neben 90 bis 99 Gew.-% Alkohol 0,1 bis 5 Gew.-% Alkylbenzoesäure oder deren Salze, 0,1 bis 5 Gew.-% einer aliphatischen Monocarbonsäure mit 8 bis 12 C-Atomen sowie 0,1 bis 0,5 Gew.-% eines Triazols enthält.

Die EP-B-308 037 lehrt eine Frostschutzzusammensetzung mit korrosionsinhibierender Eigenschaft, die im wesentlichen besteht aus: 90 bis 99 Gew.-% eines wasserlöslichen flüssigen alkoholischen Gefrierpunktserniedrigers, 0,1 bis 5 Gew.-% einer aliphatischen einbasigen Säure mit 6 bis 12 C-Atomen, 0,1 bis 5 Gew.-% einer Alkalimetall-Boratverbindung und 0,1 bis 0,5 Gew.-% eines Triazols.

Aus der EP-B-229 440 ist ein alkoholbasiertes Gefrierschutzmittelkonzentrat bekannt, das 0,1 bis 15 Gew.-% einer aliphatischen Monocarbonsäure mit 5 bis 16 C-Atomen, 0,1 bis 15 Gew.-% einer Dicarbonsäure mit 5 bis 16 C-Atomen sowie 0,1 bis 0,5 Gew.-% eines Triazols enthält, wobei die Gewichtsprozentangaben auf der Menge des vorhandenen Flüssigalkohols beruhen. Gemäß der engeren Lehre der 3 vorstehend genannten Dokumente setzt man als Alkoholkomponente vorzugsweise Ethylenglykol, als Triazol vorzugsweise Benzotriazol oder Tolyltriazol ein. Die DD-A-218 635 schlägt vor, als Korrosionsschutzsystem für Kühl- bzw. Wärmeübertragungsmittel ein Gemisch einzusetzen, das 2-Ethylhexansäure, Mercaptobenzthiazol und Carboxymethylcellulose bzw. Umsetzungsprodukte dieser 3 Komponenten enthält.

Die DE-A-195 46 472 schlägt ein Gefrierschutzmittelkonzentrat vor, bei dem das Korrosionsschutzsystem aus 0,005 bis 5 Gew.-% verzweigter aliphatischer Carbonsäuren mit 6 bis 11 C-Atomen und einer synergistischen Kombination aus jeweils 0,005 bis 0,04 Gew.-% Tolyltriazol und Benzotriazol besteht.

Diese Gefrierschutzmittel erfüllen bei ihrer Verwendung zur Kühlung von Motoren aus Grauguß oder aus Aluminiumlegierungen die technischen Anforderungen zufriedenstellend. Im Automobilbau versucht man jedoch derzeit, das Gewicht der Verbrennungsmotoren dadurch zu verringern, daß man sie teilweise oder vollständig aus Magnesium und/oder Magnesiumlegierungen herstellt. Versuche haben gezeigt, daß wegen der erhöhten chemischen Reaktivität dieser Materialien die üblichen Gefrierschutzmittel bei der in der Praxis üblichen Verdünnung mit beträchtlichen Mengen Wasser die Anforderungen an den Korrosionsschutz nicht erfüllen. Die Erfindung stellt sich daher die Aufgabe, eine Kühlflüssigkeit zur Verfügung zu stellen, mit der Bauteile wie insbesondere Verbrennungsmotoren aus Magnesium und/oder Magnesiumlegierungen ohne unakzeptable Korrosionsschäden gekühlt werden können.

Diese Aufgabe wird gelöst durch die Verwendung einer Kühlflüssigkeit, die bezogen auf die Gesamtzusammensetzung
a) 0,005 bis 0,5 Gew.-% Tolyltriazol,
b) 0,005 bis 0,5 Gew.-% Benzotriazol
c) 0,005 bis 10 Gew.-% eines oder mehrerer Korrosionsinhibitoren ausgewählt aus verzweigten aliphatischen Carbonsäure mit 6 bis 11 C-Atomen und aus Alkanolaminphosphaten,
d) 70 bis 99,985 Gew.% eines wasserlöslichen flüssigen Alkohols mit einem Siedepunkt bei Normaldruck oberhalb von 100°C
und als Rest zu 100 Gew-% Wasser, Alkalien und/oder weitere Wirkstoffe enthält,
zur Kühlung von Bauteilen aus Magnesium und/oder aus Magnesiumlegierungen.

Für den Bau von Verbrennungsmotoren kommen üblicherweise nicht reines Magnesium, sondern Magnesiumlegierungen zum Einsatz. Beispiele solcher Legierungen sind: AS 21 und AZ 91.

Die erfindungsgemäße Verwendung unterscheidet sich von der Verwendung ähnlicher, im Stand der Technik bekannter Kühlflüssigkeiten für andere Materialien als Magnesium und Magnesiumlegierungen dadurch, daß die Kühlflüssigkeit mit der vorstehend angegebenen Zusammensetzung als solche eingesetzt wird. Sie wird also nicht weiter mit Wasser verdünnt. Der Wasseranteil der Kühlflüssigkeit bei der erfindungsgemäßen Verwendung beträgt demnach maximal 30 Gew.-% und liegt vorzugsweise darunter. Vorzugsweise enthält die Kühlflüssigkeit nicht mehr als etwa 15 Gew.-% Wasser. Beispielsweise können solche Kühlflüssigkeiten erfindungsgemäß verwendet werden, die weniger als 5 Gew.-% Wasser enthalten.

Wenn im Rahmen dieser Erfindung von Carbonsäuren die Rede ist, sind damit generell die Säuren in protolysierter oder nichtprotolysierter Form gemeint, d. h. die Säuren können als solche oder als Anionen vorliegen. Das Protolysegleichgewicht der Säuren wird sich je nach pH-Wert der Kühlflüssigkeit gemäß der Säurekonstanten einstellen.

Bevorzugte Konzentrationsbereiche in der Kühlflüssigkeit betragen für die verzweigten aliphatischen Carbonsäuren der Gruppe c) 0,5 bis 4 Gew.-%, für Tolyltriazol und Benzotriazol jeweils 0,005 bis 0,05 Gew.-%. Wählt man als Korrosionsinhibitor der Gruppe c) ein Alkanolaminphosphat, so stellt man dessen Konzentration vorzugsweise auf etwa 0,1 bis etwa 10 Gew.-% ein. In diesem Fall wählt man als Alkanolaminphosphat vorzugsweise ein Trialkanolaminphosphat und insbesondere Triethanolaminphosphat.

Der wasserlösliche flüssige Alkohol soll einen Siedepunkt bei Normaldruck oberhalb von 100 °C und insbesondere oberhalb von 120 °C haben. Das Kriterium "flüssig" ist so zu verstehen, daß der gewählte Alkohol bei den Temperaturen, die entweder beim Stillstand oder beim Betrieb des zu kühlenden Aggregats auftreten können, flüssig ist. Der praxisrelevante Temperaturbereich erstreckt sich von etwa -35 °C bis etwa 110 °C. Dabei kann die Kühlflüssigkeit in einem verschlossenen Kühlsystem eingesetzt werden, in dem sich während des Betriebs des zu kühlenden Aggregats ein deutlich oberhalb des Normaldrucks liegender Arbeitsdruck aufbauen kann. Entscheidend ist, daß der eingesetzte Alkohol unter den vorliegenden Druck- und Temperaturbedingungen flüssig bleibt.

Den wasserlöslichen flüssigen Alkohol wählt man vorzugsweise aus aus Alkylenglykolen, insbesondere aus Monoethylenglykol, Diethylenglykol, Propylenglykol, Dipropylenglykol und/oder aus wassermischbaren Monoethem dieser Glykole, beispielsweise aus den Monomethyl-, Monoethyl-, Monopropyl- und Monobutylethern der genannten Glykole. Besonders bevorzugt sind Monoethylenglykol und/oder Propylenglykol.

Wählt man als Korrosionsschutzkomponente c) verzweigte aliphatische Carbonsäuren, so sind diese vorzugsweise ausgewählt aus 2-Ethylhexansäure, 2,2-Dimethyloctansäure und 3,5,5-Trimethylhexansäure oder Mischungen hiervon. Wegen ihrer leichten Verfügbarkeit und ihrer guten Korrosionsschutzwirkung ist die 2-Ethylhexansäure besonders bevorzugt.

Weiterhin ist es bevorzugt, daß die Kühlflüssigkeit als weiteren Wirkstoff zusätzlich 0,5 bis 15 Gew.-% einer oder mehrerer linearer gesättigter oder ungesättigter aliphatischer, araliphatischer oder aromatischer ein- oder mehrbasischer Carbonsäuren mit 4 bis 20 C-Atomen enthält. Die Korrosionsschutzwirkung wird hierdurch deutlich verbessert. Dabei gilt die Untergrenze der Kohlenstoffzahl, 4 C-Atome, für aliphatische Carbonsäuren. Aromatische Carbonsäuren müssen mindestens 7 C-Atome enthalten. Die faktultativ zusätzlich einzusetzenden Carbonsäuren wählt man vorzugsweise aus aus Sebazinsäure, Caprylsäure, Nonansäure, Decansäure, Undecansäure, Benzoesäure, Zimtsäure, Gluconsäure oder Mischungen hiervon. Besonders bevorzugte Säuren sind Sebazinsäure, Caprylsäure und Zimtsäure. Außer diesen Säuren können die Kühlflüssigkeiten mehrbasische Carbonsäuren mit besonders ausgeprägter komplexierender Wirkung enthalten, beispielsweise Weinsäure und insbesondere Citronensäure.

Als weiteren Wirkstoff, der die Korrosionsschutzwirkung insbesondere auf Buntmetallkomponenten verstärkt, ist Mercaptobenzthiazol, das man in der Kühlflüssigkeit in Mengen zwischen 0,0001 bis 0,5 Gew.-%, vorzugsweise von 0,002 bis 0,05 Gew.-% einsetzt. Die Wirkung des Mercaptobenzthiazols wird durch die zusätzliche Mitverwendung von Carboxymethylcellulose weiter gesteigert. Daher ist es bevorzugt, daß die Kühlflüssigkeit als weiteren Wirkstoff zusätzlich 0,0001 bis 0,5 Gew.-%, insbesondere 0,002 bis 0,05 Gew.-% Carboxymethylcellulose enthält. Dabei können Mercaptobenzthiazol und Carboxymethylcellulose unabhängig voneinander der Kühlflüssigkeit zugegeben werden. Gemäß der Lehre der DD 218 635 ist es jedoch bevorzugt, aus verzweigten aliphatischen Carbonsäure der Gruppe c), dem Mercaptobenzthiazol und der Carboxymethylcellulose bei erhöhter Temperatur (50 bis 65 °C) ein Vorgemisch herzustellen, in dem es zu partiellen Umsetzungen dieser Reaktionspartner kommen kann. Dieses Vorprodukt stellt man vorzugsweise dadurch her, daß man eine konzentrierte wäßrig-alkalische Carboxymethylcellulose-Lösung vorlegt, zu dieser unter Rühren im Temperaturbereich von 50 bis 65 °C das Mercaptobenzthiazol zugibt und diese Mischung nach mehrstündiger Reaktionszeit langsam mit der verzweigten aliphatischen Carbonsäure versetzt. Dabei liegt das Masseverhältnis der 3 Wirkstoffe Carboxymethylcellulose, Mercaptobenzthiazol und verzweigte aliphatische Carbonsäure vorzugsweise im Bereiche 1 : 1 : 1 bis 1 : 5 : 50. Wünscht man die Menge an verzweigter aliphatischer Carbonsäure in der Kühlflüssigkeit über die durch dieses Mengenverhältnis gegebene obere Grenze weiter zu erhöhen, so setzt man die erwünschte Säuremenge zusätzlich zu.

Die Kühlflüssigkeit kann weitere aus dem Stand der Technik bekannte Inhibitorkomponenten enthalten. Beispielsweise genannt seien Zinksalze sowie Alkali- oder Ammoniummolybdate, die in Mengen von 0,01 bis 2 Gew.-% eingesetzt werden können. Dies setzt allerdings einen solchen Wasseranteil in der Kühlflüssigkeit voraus, daß sich diese Komponenten auflösen.

Allerdings setzt man vorzugsweise eine Kühlflüssigkeit ein, die frei ist von Nitrit, Borat und Silicat.

### Ausführungsbeispiele

Die Tabelle 1 enthält Beispiele wasserfreier Kühlflüssigkeiten für die erfindungsgemäße Verwendung. Die Zusammensetzung ist in Gew.-% angegeben. "Wasserfrei" ist hierbei so zu verstehen, daß der Kühlflüssigkeit kein Wasser zugesetzt wurde. Es ist jedoch nicht auszuschließen, daß die Kühlflüssigkeit wegen der hygroskopischen Eigenschaft von Monoethylenglykol geringe Anteile an Wasser enthält.

**Tabelle 1:**

| Wasserfreie Kühlflüssigkeiten | | | |
|---|---|---|---|
| | Beispiele (in Gew.-%) (Rest zu 100 Gew.-%: Monoethylenglykol) | | |
| | Beisp.1 | Beisp.2 | Beisp.3 |
| Benzotriazol | 0,02 | 0,01 | 0,015 |
| Tolyltriazol | 0,02 | 0,01 | 0,01 |
| 2-Ethylhexansäure | 2,5 | 3,8 | - |
| Sabacinsäure | 1 | - | - |
| Caprylsäure | - | 1 | - |
| Mercaptobenzthiazol | - | - | 0,03 |
| Caboxymethylcellulose | 0,0001 | 0,0002 | - |
| Triethanolaminphosphat | - | - | 2 |

Die Korrosionsschutzwirkung wurde gemäß der ASTM-Prüfvorschrift D 1384-70 überprüft. Hierbei werden Probekörper von Metallen, die typischer Weise in Kraftfahrzeugkühlsystemen vorkommen, vollständig für 336 Stunden in die Frostschutzmittellösung bei gleichzeitiger Belüftung eingetaucht. Die Temperatur betrug 88 °C. Die korrosionsverhindernden Eigenschaften der Probelösungen wurden auf der Basis der Gewichtsveränderungen der Probekörper bewertet. Dabei wurde jeder Versuch 3-fach durchgeführt und der Durchschnitt der Gewichtsveränderungen für jedes Metall bestimmt. Vor Versuchsbeginn wurden die Probekörper mit einer feuchten Scheuerbürste unter Verwendung von gemahlenem Bimssteinpulver glänzend blank gerieben, mit Wasser und anschließend mit Azeton gespült, getrocknet und gewogen. Nach Versuchsende wurden die Korrosionsprodukte auf den Probekörpern durch Abbürsten und durch Eintauchen in Säurelösungen entfemt. Danach wurden die Probekörper wiederum gespült, getrocknet und gewogen. Die Tabelle 2 enthält die Gewichtsverluste (in g/m²) für unterschiedliche Metalle unter Verwendung der Beispiels- bzw. Vergleichslösungen.

Als Prüflösungen wurden die Lösungen gemäß Beispiel 1 bis 3 verwendet, die zusätzlich mit unterschiedlichen Mengen Wasser versetzt wurden. Die Prozentangaben in der Tabelle 2 sind Gew.-% bezüglich der resultierenden Gesamtmischung. Dabei wurden folgende Beispiele untersucht: Die wasserfreien Kühlflüssigkeiten gemäß Beispiel 1 wurden zusätzlich mit 10 Gew.-%, 20 Gew.-% und 30 Gew.-% Wasser versetzt, die Kühlflüssigkeit gemäß Beispiel 2 mit 10 Gew.-% Wasser und die Kühlflüssigkeit gemäß Beispiel 3 mit 5 Gew.-% Wasser. Als Vergleichsbeispiel wurde die Kühlflüssigkeit gemäß Beispiel 1 mit 50 Gew.-% Wasser versetzt.

Die Korrosionsuntersuchungen an den geprüften Metallen zeigen, daß außer bei Magnesium alle Testflüssigkeiten einschließlich der Vergleichslösung akzeptable Korrosionsergebnisse liefern. Bei Magnesium wurde jedoch nur dann akzeptabeles Korrosionsverhalten beobachtet, wenn die Testflüssigkeit bis zu 30 Gew.-% Wasser enthielt. Wie das Vergleichsbeispiel zeigt, tritt bei einem Wasseranteil von 50 Gew.-% starke Korrosion mit Lochfraß auf.

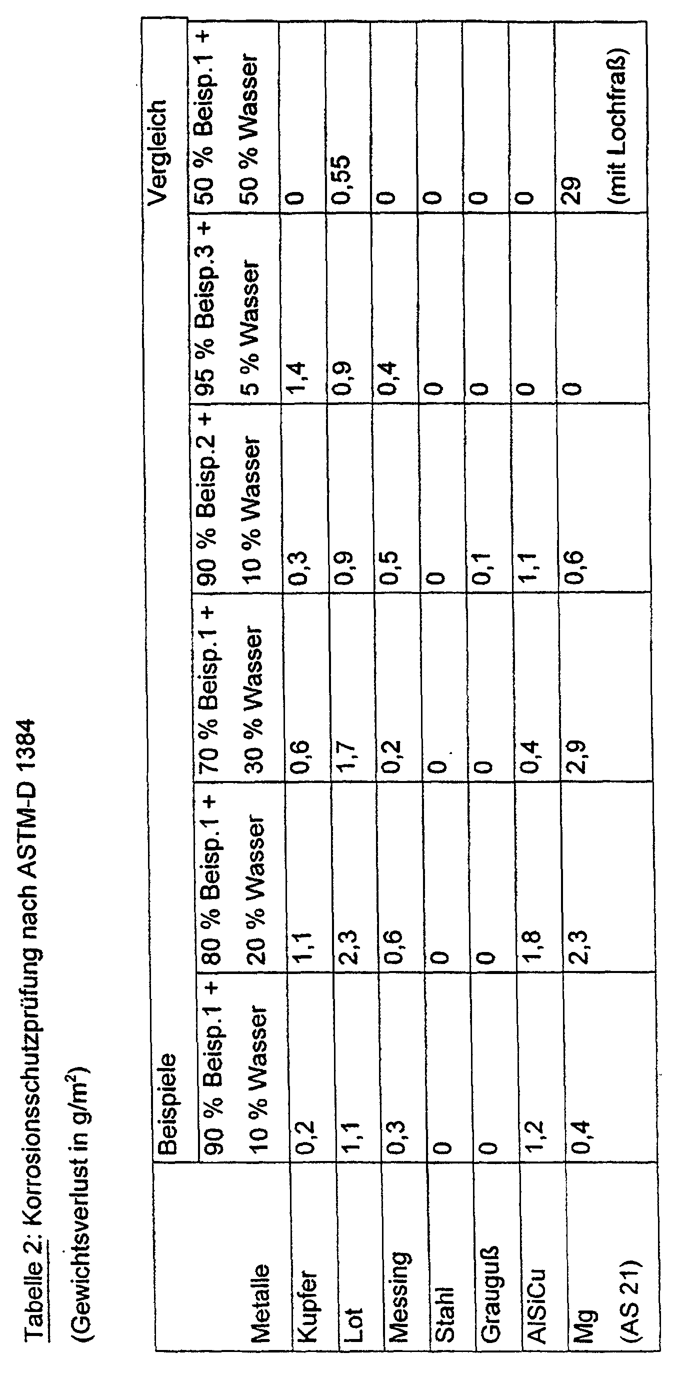

## Patentansprüche

1. Verwendung einer Kühlflüssigkeit, die bezogen auf die Gesamtzusammensetzung
a) 0,005 bis 0,5 Gew.-% Tolyltriazol,
b) 0,005 bis 0,5 Gew.-% Benzotriazol
c) 0,005 bis 10 Gew.-% eines oder mehrerer Korrosionsinhibitoren ausgewählt aus verzweigten aliphatischen Carbonsäure mit 6 bis 11 C-Atomen und aus Alkanolaminphosphaten,
d) 70 bis 99,985 Gew.% eines wasserlöslichen flüssigen Alkohols mit einem Siedepunkt bei Normaldruck oberhalb von 100°C und als Rest zu 100 Gew-% Wasser, Alkalien und/oder weitere Wirkstoffe enthält,
zur Kühlung von Bauteilen aus Magnesium und/oder aus Magnesiumlegierungen.

2. Verwendung nach Anspruch 1, **dadurch gekennzeichnet, daß** der wasserlösliche flüssige Alkohol ausgewählt ist aus Alkylenglykolen.

3. Verwendung nach Anspruch 2, **dadurch gekennzeichnet, daß** der wasserlösliche flüssige Alkohol ausgewählt ist aus Monoethylenglykol, Diethylenglykol, Propylenglykol, Dipropylenglykol und/oder aus den Monomethyl-, Monoethyl-, Monopropyl- und Monobutylether der genannten Glykole.

4. Verwendung nach einem oder mehreren der Ansprüche 1 bis 3, **dadurch gekennzeichnet, daß** der Korrosionsinhibitor ausgewählt ist aus 2-Ethylhexansäure, 2,2-Dimethyloctansäure und 3,5,5-Trimethylhexansäure oder Mischungen hiervon.

5. Verwendung nach einem oder mehreren der Ansprüche 1 bis 3, **dadurch gekennzeichnet, daß** der Korrosionsinhibitor Triethanolaminphosphat darstellt.

6. Verwendung nach einem oder mehreren der Ansprüche 1 bis 5, **dadurch gekennzeichnet, daß** die Kühlflüssigkeit als weiteren Wirkstoff zusätzlich 0,5 bis 15 Gew.-% einer oder mehrerer linearer gesättigter oder ungesättigter aliphatischer , araliphatischer oder aromatischer ein- oder mehrbasicher Carbonsäuren mit 4 bis 20 C-Atomen enthält.

7. Verwendung nach einem oder mehreren der Ansprüche 1 bis 6, **dadurch gekennzeichnet, daß** die Kühlflüssigkeit als weiteren Wirkstoff zusätzlich 0,0001 bis 0,5 Gew.-% Mercaptobenzthiazol enthält.

8. Verwendung nach einem oder mehreren der Ansprüche 1 bis 7, **dadurch gekennzeichnet, daß** die Kühlflüssigkeit als weiteren Wirkstoff zusätzlich 0,0001 bis 0,5 Gew.-% Carboxymethylcellulose enthält.

9. Verwendung nach einem oder mehreren mehreren der Ansprüche 1 bis 8, **dadurch gekennzeichnet, daß** die Kühlflüssigkeit frei ist von Nitrit, Borat und Silicat

## Claims

1. Use of a cooling fluid containing, based on the total composition thereof,
a) from 0.005 to 0.5% by weight of tolyltriazole;
b) from 0.005 to 0.5% by weight of benzotriazole;
c) from 0.005 to 10% by weight of one or more corrosion inhibitors selected from branched aliphatic carboxylic acids having from 6 to 11 carbon atoms and alkanolamine phosphates;
d) from 70 to 99.985% by weight of a water-soluble liquid alcohol having a boiling point at normal pressure of above 100 °C; and water, alkalis and/or other active ingredients as the balance for 100% by weight;
for the cooling of component parts made of magnesium and/or magnesium alloys.

2. The use according to claim 1, **characterized in that** said water-soluble liquid alcohol is selected from alkylene glycols.

3. The use according to claim 2, **characterized in that** said water-soluble liquid alcohol is selected from monoethylene glycol, diethylene glycol, propylene glycol, dipropylene glycol and/or from the monomethyl, monoethyl, monopropyl and monobutyl ethers of the mentioned glycols.

4. The use according to one or more of claims 1 to 3, **characterized in that** said corrosion inhibitor is selected from 2-ethylhexanoic acid, 2,2-dimethyloctanoic acid and 3,5,5-trimethylhexanoic acid, or mixtures thereof.

5. The use according to one or more of claims 1 to 3, **characterized in that** said corrosion inhibitor is triethanolamine phosphate.

6. The use according to one or more of claims 1 to 5, **characterized in that** said cooling fluid additionally contains as a further active ingredient from 0.5 to 15% by weight of one or more linear saturated or unsaturated aliphatic, araliphatic or aromatic mono- or polybasic carboxylic acids having from 4 to 20 carbon atoms.

7. The use according to one or more of claims 1 to 6, **characterized in that** said cooling fluid additionally contains as a further active ingredient from 0.0001 to 0.5% by weight of mercaptobenzothiazole.

8. The use according to one or more of claims 1 to 7, **characterized in that** said cooling fluid additionally contains as a further active ingredient from 0.0001 to 0.5% by weight of carboxymethylcellulose.

9. The use according to one or more of claims 1 to 8, **characterized in that** said cooling fluid is free of nitrite, borate and silicate.

## Revendications

1. Utilisation d'un liquide de refroidissement qui contient, sur la base de la composition totale,
a) 0,005 à 0,5 % en poids de tolyltriazol
b) 0,005 à 0,5 % en poids de benzotriazol
c) 0,005 à 10 % en poids d'un ou de plusieurs inhibiteur(s) de corrosion choisi(s) parmi des acides carboxyliques aliphatiques ramifiés comportant 6 à 11 atomes de carbone et parmi des phosphates d'alcanolamine,
d) 70 à 99,985 % en poids d'un alcool liquide hydrosoluble présentant un point d'ébullition sous pression normale supérieur à 100 °C
et pour le reste jusqu'à 100 % en poids d'eau, d'alcalis et/ou d'autres additifs,
pour refroidir des pièces en magnésium et/ou en alliages de magnésium.

2. Utilisation selon la revendication 1, **caractérisée en ce que** l'alcool liquide hydrosoluble est choisi parmi des alkylèneglycols.

3. Utilisation selon la revendication 2, **caractérisée en ce que** l'alcool liquide hydrosoluble est choisi parmi le monoéthylèneglycol, le diéthylèneglycol, le propylèneglycol, le dipropylèneglycol et/ou parmi le monométhyl-, monoéthyl-, monopropyl- et monobutyl-éther des glycols nommés.

4. Utilisation selon une ou plusieurs des revendications 1 à 3, **caractérisée en ce que** l'inhibiteur de corrosion est choisi parmi l'acide 2-éthylhexanique, l'acide 2,2-diméthyloctanique et l'acide 3,5,5-triméthylhexanique, ou des mélanges de ceux-ci.

5. Utilisation selon une ou plusieurs des revendications 1 à 3, **caractérisée en ce que** l'inhibiteur de corrosion représente le phosphate de triéthanolamine.

6. Utilisation selon une ou plusieurs des revendications 1 à 5, **caractérisée en ce que** le liquide de refroidissement contient en outre en tant qu'additif supplémentaire 0,5 à 15 % en poids d'un ou de plusieurs acides carboxyliques linéaires mono- ou polybasiques, saturés ou insaturés, aliphatiques, araliphatiques ou aromatiques, comportant 4 à 20 atomes de carbone.

7. Utilisation selon une ou plusieurs des revendications 1 à 6, **caractérisée en ce que** le liquide de refroidissement contient en outre en tant qu'additif supplémentaire 0,0001 à 0,5 % en poids de mercaptobenzothiazol.

8. Utilisation selon une ou plusieurs des revendications 1 à 7, **caractérisée en ce que** le liquide de refroidissement contient en outre en tant qu'additif supplémentaire 0,0001 à 0,5 % en poids de carboxyméthylcellulose.

9. Utilisation selon une ou plusieurs des revendications 1 à 8, **caractérisée en ce que** le liquide de refroidissement est exempt de nitrite, de borate et de silicate.
